# EUROPÄISCHE PATENTSCHRIFT

(11) **EP 1 258 934 B1**
(45) Veröffentlichungstag und Bekanntmachung des Hinweises auf die Patenterteilung: **20.10.2010**
(21) Anmeldenummer: 02009535.2
(22) Anmeldetag: 26.04.2002
(51) Int. Cl.: H01M 8/04

(54) **Druckregler für ein Brennstoffzellensystem**
Pressure regulator for a fuel cell system
Régulateur de pression pour un système de pile à combustible

(30) Priorität: 17.05.2001 DE 10123923
(43) Veröffentlichungstag der Anmeldung: 20.11.2002
(73) Patentinhaber: NuCellSys GmbH, 73230 Kirchheim/Teck-Nabern (DE)
(72) Erfinder: Mühlherr, Rainer, 73230 Kirchheim (DE); Wagner, Michael, 73230 Kirchheim (DE)
(74) Vertreter: JENSEN & SON

(56) Entgegenhaltungen:
- GB-A- 1 471 324
- US-A- 3 087 004
- US-A- 3 106 494
- US-A- 4 509 548
- PATENT ABSTRACTS OF JAPAN Bd. 010, Nr. 061 (E-387), 11. März 1986 (1986-03-11) & JP 60 212967 A (HITACHI SEISAKUSHO KK), 25. Oktober 1985 (1985-10-25)

## Beschreibung

Die Erfindung betrifft einen Druckregler für eine Brennstoffzelleneinheit gemäß dem Oberbegriff des Patentanspruchs 1.

Die gattungsgemäße GB 1 471 324 beschreibt einen Druckregler für eine Brennstoffzelle, bei dem mittels Stellmitteln der Zustrom an Gas zu einer Brennstoffzelle geregelt wird. Dazu sind gekoppelte Membranen mit den anodenseitigen und kathodenseitigen Zustromleitungen der Brennstoffzelle verbunden. Über durch die Membranen bewegte Stellmittel werden die beiden Zuströme entsprechend beeinflusst und so deren Volumenströme und Drücke geregelt.

Aus der JP 60212967 A ist ein Druckregler für ein Brennstoffzellensystem bekannt. Der Druckregler umfasst eine Membran, die den Druckregler in einen anodenseitigen Bereich und in einen kathodenseitigen Bereich trennt. Der anodenseitige Bereich weist einen Einlass und einen Auslass für ein wasserstoffreiches Gas auf, wobei der Auslass mit dem Einlass der Anodenseite einer Brennstoffzelleneinheit verbunden ist. Entsprechend weist der kathodenseitige Bereich des Druckreglers einen Einlass und einen Auslass für ein sauerstoffreiches Gas auf, wobei der Auslass mit dem Einlass der Kathodenseite einer Brennstoffzelleneinheit verbunden ist. Der Druckregler dient dem Ausgleich von Druckdifferenzen zwischen dem wasserstoffreichen Gas und dem sauerstoffreichen Gas.

Auch die US 3,106,494 beschreibt eine Differenzdruckregelung, bei der mit Hilfe von membrangesteuerten Ventilen der Zustrom von Gasen zu einem System geregelt wird. Dabei beeinflusst der eine Gastrom jeweils die Steuermembran des anderen Gasstroms.

Der Erfindung liegt die Aufgabe zugrunde, einen Druckregler anzugeben, der flexibel ausführbar ist und effizient einen vorgegebenen Differenzdruck zwischen der Anodenseite und der Kathodenseite einer Brennstoffzelleneinheit einstellt.

Diese Aufgabe wird durch die Merkmale des Anspruchs 1 gelöst.

Dadurch, daß der Druckregler ein Stellmittel besitzt, das auf die eine Einlassseite und ebenfalls auf die jeweils andere Auslassseite der Brennstoffzelleneinheit einwirken kann, ergeben sich vielfältige Möglichkeiten den Differenzdruck zwischen der Anodenseite und der Kathodenseite der Brennstoffzelleneinheit einzustellen. Somit kann der Druckregler durch flexible Gestaltung an die gegebenen Platzverhältnisse angepasst werden. Der Effekt des Reglers wird durch die gleichzeitige Einbeziehung der einen Einlass- und der jeweils anderen Auslassseite verstärkt.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung gehen aus den weiteren Ansprüchen und der Beschreibung hervor.

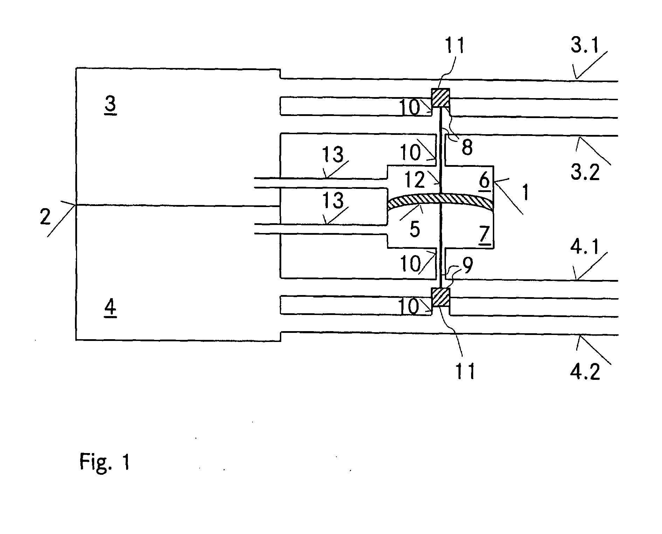

Die Erfindung ist nachstehend anhand einer Zeichnung näher beschrieben. Die einzige Figur zeigt
- eine Prinzipdarstellung eines bevorzugten Druckreglers mit einem Stellmittel, das auf den Einlass und den Auslass der Anodenseite und auf den Einlass und den Auslass der Kathodenseite der Brennstoffzelleneinheit einwirkt.

In der einzigen Figur ist eine Prinzipdarstellung eines bevorzugten Druckreglers 1 für eine Brennstoffzelleneinheit 2 mit einer Anodenseite 3 und einer Kathodenseite 4 dargestellt. Die Anodenseite 3 der Brennstoffzelleneinheit weist einen Einlass 3.2 für Wasserstoff oder ein wasserstoffreiches Gas und einen Auslass 3.1 für Anodenabgas auf. Entsprechend weist die Kathodenseite 4 der Brennstoffzelleneinheit 2 einen Einlass 4.1 für Sauerstoff oder ein sauerstoffreiches Gas und einen Auslass 4.2 für Kathodenabgas auf. Der Druckregler 1 enthält eine Membran 5, die den Druckregler 1 in einen anodenseitigen Bereich 6 und einen kathodenseitigen Bereich 7 trennt. Im anodenseitigen Bereich 6 des Druckreglers 1 ist die Membran 5 von dem Druck der Anodenseite 3 der Brennstoffzelleneinheit 2 beaufschlagt. Im kathodenseitigen Bereich 7 des Druckreglers 1 ist die Membran 5 von dem Druck der Kathodenseite 4 der Brennstoffzelleneinheit 2 beaufschlagt. Die Beaufschlagung der Membran 5 mit dem Druck der Anoden- bzw. der Kathodenseite 3, 4 erfolgt bevorzugt über die Leitungen 13, die den anodenseitigen Bereich 6 des Druckreglers 1 mit der Anodenseite 3 und den kathodenseitigen Bereich 7 des Druckreglers 1 mit der Kathodenseite 4 der Brennstoffzelleneinheit verbinden.

Der Druckregler 1 kann der Einstellung des gleichen Drucks auf der Anodenseite 3 und der Kathodenseite 4 der Brennstoffzelleneinheit 2 dienen. Ferner kann über den Druckregler 1 ein vorgegebener Differenzdruck zwischen der Anodenseite 3 und der Kathodenseite 4 eingestellt werden. Zur Druckeinstellung ist die Membran 5 mit einem Stellmittel 8, 9 verbunden. Weiterhin kann die Membran 5 zur Einstellung eines vorgegebenen Differenzdrucks mit einer Vorspannung behaftet sein. Die Vorspannung der Membran 5 kann beispielsweise über eine nicht dargestellte, dem Druckregler 1 zugeordnete Feder erfolgen. Die Druckregelung erfolgt demnach rein mechanisch und ist ungleich einfacher als bei der Verwendung eines elektronischen Regel- oder Steuersystems mit einem Steuergerät. Der Druckregler 1 ist wartungsarm und preiswert.

Das Stellmittel 8, 9 weist eine starre Verbindung mit der Membran 5 auf. Wird die Membran 5 in Folge einer Änderung des Drucks auf der Anoden- bzw. auf der Kathodenseite 3, 4 deformiert, so folgt das Stellmittel der Membranbewegung. Das Stellmittel ist also durch die Membranbewegung hin- und herbeweglich.

Außerdem umfasst das Stellmittel 8, 9 eine Blockiereinheit 11, die starr mit der Membran 5 verbunden ist. Diese Blockiereinheit 11 ist vorteilhafterweise über einen starren Schaft 12 mit der Membran 5 verbunden. Die Blockiereinheit 11 schließt gasdicht mit der Führungsleitung 10 ab und dient dazu die Querschnitte der Einlässe 3.2, 4.1 bzw. der Auslässe 3.1, 4.2 der Brennstoffzelleneinheit 2 zu verändern.

Das Stellmittel 8, 9 wirkt gleichzeitig und auf gleiche Weise auf den Querschnitt des Einlasses 3.2 der Anodenseite 3 und auf den Querschnitt des Auslasses 4.2 der Kathodenseite 4 oder auf den Querschnitt des Auslasses 3.1 der Anodenseite 3 und auf den Querschnitt des Einlasses 4.1 der Kathodenseite 4 ein. Ist der Druck auf der Anodenseite 3 höher als der Druck auf der Kathodenseite 4, so dehnt sich die Membran 5 in den Bereich 7 aus und das Stellmittel 8, 9 bzw. die Blockiereinheit 11 verringert den Querschnitt des anodenseitigen Einlasses 3.2 und in gleichem Maße den Querschnitt des kathodenseitigen Auslasses 4.2. Damit wird der Druck auf der Kathodenseite 4 gegenüber dem Druck auf der Anodenseite 3 erhöht. Ist der Druck auf der Kathodenseite 4 dagegen höher als der Druck auf der Anodenseite 3, so dehnt sich die Membran in den Bereich 6 aus und das Stellmittel 8, 9 bzw. die Blockiereinheit 11 verringert den Querschnitt des kathodenseitigen Einlasses 4.1 und in gleichem Maße den Querschnitt des anodenseitigen Auslasses 3.1. Dadurch wird der Druck auf der Anodenseite 3 gegenüber dem Druck auf der Kathodenseite 4 erhöht. Die Art der Einwirkung des Stellmittels 8, 9 auf die Anodenseite 3 und auf die Kathodenseite 4 der Brennstoffzelleneinheit 2 ist also gegenläufig. Wirkt das Stellmittel 8, 9 auf den Einlass der einen Seite ein, so wirkt es in gleichem Maße auf den Auslass der anderen Seite ein und umgekehrt. Durch die gleichzeitige Einwirkung auf Anoden- und Kathodenseite 3, 4 wird der Effekt des Druckreglers gegenüber einer einseitigen Anwendung verstärkt.

Vorzugsweise sind dem erfindungsgemäßen Druckregler 1 Führungsleitungen 10 für das Stellmittel 8, 9 zugeordnet, die den anodenseitigen Bereich 6 der Membran 5 mit dem anodenseitigen Einlass 3.2 und dem anodenseitigen Auslass 3.1 verbinden und die den kathodenseitigen Bereich 7 der Membran 5 mit dem kathodenseitigen Einlass 4.1 und dem kathodenseitigen Auslass 4.2 verbinden. Die Führungsleitungen 10 dienen dazu, dem Stellmittel 8, 9 die Bewegungsrichtungen vorzugeben und somit ein Verkanten des Stellmittels 8, 9 zu verhindern.

Die individuellen und flexiblen Gestaltungsmöglichkeiten bei der Ausführungsform des Druckreglers 1 geben dem Anwender zusätzliche Freiheitsgrade in Bezug auf Einbau und Aussehen des Druckreglers 1.

## Patentansprüche

1. Druckregler (1) für eine Brennstoffzelleneinheit (2) mit einer Anodenseite (3) und einer Kathodenseite (4),
- wobei die Anodenseite (3) einen Einlass (3.2) für ein wasserstoffreiches Gas in die Brennstoffzelleneinheit (2) und einen Auslass (3.1) für Anodenabgas aufweist und die Kathodenseite (4) einen Einlass (4.1) für ein sauerstoffreiches Gas in die Brennstoffzelleneinheit (2) und einen Auslass (4.2) für Kathodenabgas aufweist,
- wobei der Druckregler (1) eine Membran (5) aufweist, die den Druckregler (1) in einen anodenseitigen Bereich (6) und einen kathodenseitigen Bereich (7) trennt,
wobei die Membran (5) im anodenseitigen Bereich (6) von dem Druck der Anodenseite (3) und im kathodenseitigen Bereich (7) von dem Druck der Kathodenseite (4) beaufschlagt ist,
- und wobei die Membran (5) mit einem Stellmittel (8, 9) zur Einstellung eines vorgegebenen Drucks auf der Anodenseite (3) und/oder der Kathodenseite (4) verbunden ist,
**dadurch gekennzeichnet, daß**
das Stellmittel (8, 9) gleichzeitig und auf gleiche Weise auf den Querschnitt des Einlasses (3.2) der Anodenseite (3) und auf den Querschnitt des Auslasses (4.2) der Kathodenseite (4) oder auf den Querschnitt des Auslasses (3.1) der Anodenseite (3) und auf den Querschnitt des Einlasses (4.1) der Kathodenseite (4) einwirkt.

2. Druckregler nach Anspruch 1,
**dadurch gekennzeichnet, daß**
das Stellmittel (8, 9) eine starre Verbindung mit der Membran (5) aufweist und durch die Membranbewegung hin- und herbeweglich ist.

3. Druckregler nach Anspruch 1,
**dadurch gekennzeichnet, daß**
Führungsleitungen (10) für das Stellmittel (8, 9) vorhanden sind, die den anodenseitigen Bereich (6) der Membran (5) mit dem anodenseitigen Einlass (3.2) und dem anodenseitigen Auslass (3.1) verbinden und/oder die den kathodenseitigen Bereich (7) der Membran (5) mit dem kathodenseitigen Einlass (4.1) und dem kathodenseitigen Auslass (4.2) verbinden.

4. Druckregler nach Anspruch 1,
**dadurch gekennzeichnet, daß**
Führungsleitungen (10) für das Stellmittel (8, 9) vorhanden sind, die den anodenseitigen Bereich (6) der Membran (5) mit dem anodenseitigen Einlass (3.2) und den kathodenseitigen Bereich (7) mit dem kathodenseitigen Einlass (4.1) verbinden und/oder die den anodenseitigen Bereich (6) mit dem anodenseitigen Auslass (3.1) und den kathodenseitigen Bereich (7) mit dem kathodenseitigen Auslass (4.2) verbinden.

5. Druckregler nach Anspruch 1,
**dadurch gekennzeichnet, daß**
das Stellmittel (8, 9) eine Blockiereinheit (11) aufweist, die starr mit der Membran (5) verbunden ist.

6. Druckregler nach Anspruch 5,
**dadurch gekennzeichnet, daß**
die Blockiereinheit (11) über einen starren Schaft (12) mit der Membran (5) verbunden ist.

## Claims

1. Pressure regulator (1) for a fuel cell unit (2) with an anode side (3) and a cathode side (4).
- wherein the anode side (3) has an inlet (32) into the fuel cell unit (2) for a gas rich in hydrogen and an outlet (31) for anode exhaust gas and the cathode side (4) has an inlet (4.1) into the fuel cell unit (2) for a gas nich in oxygen and an outlet (4.2) for cathode exhaust gas,
- wherein the pressure regulator (1) comprises a diaphragm (5) which divides the pressure regulator (1) into an anode-side region (6) and a cathode-side region (7),
- wherein the pressure of the anode side (3) is applied to the anode-side region (6) of the diaphragm (5) and the pressure of the cathode side (4) is applied to as cathode-side region (7),
- and wherein the diaphragm (5) is connected to adjusting means (8, 9) for adjusting a preset pressure on the anode side (3) and/or on the cathode side (4), **characterised in that**
the adjusting means act simultaneously and in the same way on the cross-section of the inlet (3.2) of the anode side (3) and on the cross-section of the outlet (4.2) of the cathode side (4) or on the cross section of the outlet (3.1) of the anode side (3) and on the cross-section of the inlet (4.1) of the cathode side (4).

2. Pressure regulator according to claim 1,
**characterised in that**
the adjusting means (8. 9) are rigidly joined to the diaphragm (5) and movable in a reciprocating motion by the motion of the diaphragm.

3. Pressure regulator according to claim 1,
**characterised in that**
guide lines (10) are provided for the adjusting means (8, 9) to connect the anode-side region (6) of the diaphragm (5) to the anode-side inlet (3.2) and the anode-side outlet (3.1) and/or to connect the cathode-side region (7) of the diaphragm (5) to the cathode-side inlet (4.1) and the cathode-side outlet (4.2).

4. Pressure regulator according to claim 1,
**characterised in that**
guide lines (10) are provided for the adjusting means (8, 9) to connect the anode-side region (6) of the diaphragm (5) to the anode-side inlet (3.2) and the cathode-side region (7) to the cathode-side inlet (4.1) and/or to connect the anode-side region (6) to the anode-side outlet (3.1) and the cathode-side region (7) to the cathode-side outlet (4.2).

5. Pressure regulator according to claim 1,
**characterised in that**
the adjusting means (8, 9) comprise a blocking unit (11) which is rigidly joined to the diaphragm (5).

6. Pressure regulator according to claim 5,
**characterised in that**
the blocking unit (11) is joined to the diaphragm (5) via a rigid shank (12),

## Revendications

1. Régulateur de pression (1) pour une unité pile à combustible, (2) doté d'un côté d'anode (3) et d'un côté de cathode (4),
- le côté d'anode (3) présentant un orifice d'entrée (3.2) pour un gaz enrichi en hydrogène dans l'unité pile à combustible (2) et un orifice de sortie (3.1) pour les effluents gazeux de l'anode et le côté de cathode (4) présentant un orifice d'entrée (4.1) pour un gaz riche en oxygène dans l'unité pile à combustible (2) et un orifice de sortie (4.2) pour les effluents gazeux de cathode,
- le régulateur de pression (1) présente une membrane (5) qui divise le régulateur de pression (1) en une région côté d'anode (6) et une région côté de cathode (7), la membrane (5) étant soumise dans la zone côté d'anode (6) à la pression du côté d'anode (3) et dans la zone côté de cathode (7) à la pression du côté de cathode (4),
- et la membrane (5) étant reliée à un organe de réglage (8, 9) qui permet de régler une pression déterminée sur le côté d'anode (3) et / ou sur le côté de cathode (4), **caractérisé en ce que**
l'organe de réglage (8, 9) agit de manière simultanée et similaire sur la section transversale dé l'orifice d'entrée (3.2) du côté d'anode (3) et sur la section transversale de l'orifice de sortie (4.2) du côté de cathode (4) où sur la section transversale de l'orifice de sortie (3.1) du côté d'anode (3) et sur la section transversale de l'orifice d'entrée (4.1) du côté de cathode (4).

2. Régulateur de pression selon la revendication 1, **caractérisé en ce que** l'organe de réglage (8, 9) présente une liaison rigide dotée d'une membrane (5) et qui peut se déplacer en va-et-vient grâce au mouvement de la membrane.

3. Régulateur de pression selon la revendication 1, **caractérisé en ce que** sont prévues des conduites de guidage (10) pour l'organe de réglage (8, 9) qui relient la zone côté d'anode (6) de la membrane (5) à l'orifice d'entrée côté d'anode (3.2) et à l'orifice de sortie côté l'anode (3.1) et / ou qui relient la zone côté de cathode (7) de ia membrane (5) à l'orifice d'entrée côté de cathode (4.1) et l'orifice de sortie côté de cathode (4.2).

4. Régulateur de pression selon la revendication 1, **caractérisé en ce que** sont prévues des conduites de guindage (10) pour l'organe de réglage (8, 9) qui relient la zone côté d'anode (6) de la membrane (5) à l'orifice d'entrée côté d'anode (3.2) et la zone côté de cathode (7) à l'orifice d'entrée côté de cathode (4.1) et / ou qui relient la zone côté d'anode (6) à l'orifice de sortie côté d'anode (3.1) et la zone côté de cathode (7) à l'orifice de sortie côté de cathode (4.2).

5. Régulateur de pression selon la revendication 1, **caractérisé en ce que** l'organe de réglage (8, 9) présente un dispositif de blocage (11) qui est relié rigidement à la membrane (5).

6. Régulateur de pression selon la revendication 5, **caractérisé en ce que** le dispositif de blocage (11) est relié par une tige fixe (12) à la membrane.
